# EUROPÄISCHE PATENTANMELDUNG

(11) **EP 0 820 945 A2**
(43) Veröffentlichungstag der Anmeldung: **28.01.1998**
(21) Anmeldenummer: 97810464.4
(22) Anmeldetag: 11.07.1997
(51) Int. Cl.: B65H 19/18, B65H 41/00

(54) **Verfahren und Anlage zum Behandeln mehrlagiger Werkstoffbahnen, insbesondere mehrlagiger dünner Metall- oder Kunststoffbänder**

(30) Priorität: 24.07.1996 DE 19629874; 31.10.1996 DE 19644001
(71) Anmelder: Alusuisse Technology & Management AG, 8212 Neuhausen am Rheinfall (CH)
(72) Erfinder: Klopfleisch, Günter, 88662 Ueberlingen (DE); Swiatek, Edmont, 78253 Eigeltingen (DE); Feiss, Gottfried, 78351 Bodmann (DE)

(57) **Zusammenfassung**

Zum Behandeln mehrlagiger dünner Metall- oder Kunststoffbänder werden die von einer Abwickeleinrichtung (10) kommenden Werkstoffbahnen endwärts durch von einem Schweißgerät (24) aufzubringende Schweißnähte zu Endlosbahnen verbunden und deren Bahnlagen getrennt, indem die benachbarten Enden zweier einander in Förderrichtung (x) folgender mehrlagiger Werkstoffbahnen (16,16ₐ) durch Verschweißen ihrer Bahnlagen (17,17ₐ;18,18ₐ) im Bereich der Stoßkanten (34) miteinander verbunden sowie nachfolgend die Bahnlagen voneinander getrennt werden. Dazu ist das Schweißgerät (24) zwischen einer Einsatzrolle (12) und einer Trenneinrichtung (42) angeordnet.

## Beschreibung

Die Erfindung betrifft ein Verfahren zum Behandeln mehrlagiger Werkstoffbahnen -- insbesondere mehrlagiger dünner schweißbarer Metall- oder Kunststoffbänder --, bei dem die Werkstoffbahnen durch in einer Auswickeleinrichtung von einem Schweißgerät aufzubringende Schweißnähte zu Endlosbahnen verbunden und die Bahnlagen voneinander getrennt werden. Zudem erfaßt die Erfindung eine Anlage, in welcher die Werkstoffbahnen auf einer Einsatzrolle einer Auswickeleinrichtung zugeführt werden, in der sie durch von einem Schweißgerät aufzubringende Schweißnähte zu Endlosbahnen verbunden werden und in dieser Form zu einer Trenneinrichtung gelangen.

Zum Behandeln solcher mehrlagiger -- vor allem zweilagiger -- Werkstoffbahnen werden bekanntlich Auswickel- und Rollenschneidmaschinen eingesetzt. Diese dienen dazu, die in einem voraufgehenden Fertigungsvorgang doppelt in einer Einsatzrolle aufgewickelten Werkstoffbahnen auseinanderzuwickeln mit gegebenenfalls gleichzeitiger Randbesäumung. Mit der Rollenschneidmaschine od. dgl. Schneidpartie kann die auseinandergewickelte Werkstoffbahn zusätzlich in mehrere schmalere Bahnen geschnitten werden; letztere werden nebeneinander auf Fertigrollen aufgewickelt und dann bestimmungsgemäß zu Endprodukten verarbeitet.

Beim Auseinanderwickeln von doppelt aufgewickelten Werkstoff- oder Materialbahnen ist es grundsätzlich nicht möglich, die Länge der Materialbahn in der Fertigrolle bzw. die Größe derselben auf die Länge der Materialbahn in Einsatzrollen restlos abzustimmen. So kommt es ständig vor, daß die Einsatzrolle bereits völlig abgewickelt ist, wenn die Fertigrolle ihre noch nicht benötigte Bahnlänge bzw. Rollengröße erreicht hat.

Bei der Produktion von Bändern aus Kunststoff oder einer Aluminiumlegierung bzw. von Laminaten aus Aluminiumfolie und wenigstens einer Deckschicht aus Kunststoff werden diese zur Verbindung miteinander geprägt, geklebt, geheftet oder aber verschweißt, wozu man üblicherweise ein Ultraschall-Schweißgerät einsetzt. Solche Schweißgeräte verbinden zwei Materialbahnen durch ein mechanisches Zusammenwirken von Anpreßdruck und Ultraschallschwingungen, hervorgerufen in einem sogenannten Schwingungskopf, und übertragen diese auf die Schweißstelle durch ein an den Schwingungskopf angeschlossenes Schweißrad, das mit bestimmter Geschwindigkeit quer über die ganze Materialbahnbreite fährt.

In kleinere Abwickelmaschinen werden beim Einsatzrollenwechsel beide Materialbahnen von Hand eingezogen. Sollen die Materialbahnen vor den sie aufnehmenden Aufwickelrollen oder Aufwicklern -- beim sog. Flicken -- endlos gemacht werden, muß man sie nach dem Trennvorgang einzeln verschweißen, nieten od. dgl. und weiter aufwickeln.

In größeren Auswickelmaschinen ist die Entfernung zwischen der Abwickeleinrichtung und den Aufwicklern relativ groß, und man muß beim Einsatzrollenwechsel beide Materiallagen direkt hinter dem Abwickler nacheinander mit den ablaufenden Materiallagen provisorisch verbinden, in der Regel mit einem Klebeband. Diese Klebestelle muß dann samt einer bestimmten Bandlänge vor den Aufwicklern mühsam entfernt werden. Zum Endlosmachen der Materialbahnen werden diese dann einzeln nach dem Trennvorgang direkt vor den Aufwicklern ultraschallverschweißt.

Der Erfinder hat erkannt, daß das Verschweißen der Materialbahnen erst hinter der Schneidpartie bei den bekannten Verfahren von Nachteil ist; eine stellenweise Breitenabweichung bzw. ein Materialversatz -- wie auch eine Bandzugabnahme -- sind unvermeidbar. Diese Fehler erschweren die Weiterverarbeitung der ausgewickelten Bänder und führen unter Umständen zu Bandrissen, Oberflächenfehlern (Kratzer) in einigen Wickellagen hinter der Schweißstelle oder sogar zum Teleskopieren der Rollen.

Bei Vorhandensein der oben erwähnten Klebestellen müssen diese hinter der Trenneinrichtung oder Trennpartie aus der Materialbahn herausgetrennt werden. Dieses bedeutet Zeitaufwand und Mehrabfall. Da auch ein darauffolgender Schweißvorgang unvermeidbar ist, entstehen Fehler, wie sie bereits vorher beschrieben sind.

In Kenntnis der Unzulänglichkeiten bekannter Verfahren hat sich der Erfinder das Ziel gesetzt, unter Meidung der geschilderten Mängel eine "endlose" Materialbahn in der Auswickelmaschine zu erhalten. Die Verbindungsstelle zwischen zwei mehrlagigen Werkstoffbahnen soll in einem Fertigungsgang mitbesäumt und -geschnitten werden, zudem soll der Wickelzug aufrechterhalten werden und kein unnötiger Abfall wie auch Zeitaufwand entstehen.

Zur Lösung dieser Aufgabe führen die Lehren der unabhängigen Patentansprüche; die Unteransprüche geben günstige Ausgestaltungen an.

Erfindungsgemäß werden die benachbarten Enden zweier einander in Förderrichtung folgender mehrlagiger Werkstoffbahnen durch Verschweißen ihrer Bahnlagen im Bereich der Stoßkanten miteinander verbunden sowie nachfolgend die Bahnlagen voneinander getrennt; die -- bevorzugt zwei -- Materialbahnlagen werden unmittelbar hinter dem Abwickler, also vor dem Trennvorgang, endlos verschweißt. Dazu wird ein bekanntes Ultraschall-Schweißgerät eingesetzt, wobei die Schweißzone unmittelbar nach dem Abwickler angeordnet ist und das Verschweißen der einzelnen Materialbahnen im Gegensatz zum Stande der Technik -- nicht nach, sondern -- vor dem Materialbahn-Trennvorgang erfolgt.

Nach einem weiteren Merkmal der Erfindung wird nach dem Verschweißen der dem Schweißgerät -- oder einem von ihm umfaßten Schweißrad -- fernen Paarung von Bahnlagen die freien Enden der zweiten Paarung von Bahnlagen aufeinandergelegt, wonach vorteilhafterweise letztere bei der Rückführung des Schweißgerätes bzw. Schweißrades über die gleiche Schweißspur verschweißt wird.

Vorteilhafterweise werden die benachbarten Enden der beiden mehrlagigen Werkstoffbahnen um ein Überlappungsmaß übereinandergeschoben, und anschließend wird der Überlappungsbereich jeder Bahnlage verschweißt.

Dazu sind erfindungsgemäß die freien Enden der dem Schweißgerät naheliegenden -- also oberen -- Paarung von Bahnlagen abzuklappen sowie die freien Enden der vom Schweißgerät abgekehrten -- also unteren -- Paarung von Bahnlagen freizulegen, wonach diese freien Enden der gerätfernen Bahnlage/n miteinander verschweißt werden. Anschließend erfolgt das Verschweißen der gerätnahen Bahnlage/n.

So entsteht bereits im Einlauf der Auswickelmaschine eine endlose Materialbahn; die Schweißstelle läuft dann durch den Schneid- bzw. Besäumvorgang, der Bandzug kann aufrechterhalten werden, und eine einwandfreie Aufwicklung ohne Bandversatz ist durchführbar.

Durch eine optimale, jeweils auf die Eigenschaften des zu verschweißenden Materials abgestimmte Einstellung von Leistung, Anpreßdruck und Frequenz des Ultraschall-Schweißgerätes wie auch seiner Fahrgeschwindigkeit wird gewährleistet, daß nach dem zweiten Schweißvorgang die oben liegenden Materialbahnpartner miteinander fest verbunden sind, ohne daß sie mit der darunterliegenden, bereits aneinandergefügten Materialbahn verschweißt werden.

In einigen wenigen Fällen, in denen die beiden übereinander ausgeführten Schweißnähte doch eine leicht trennbare Verbindung eingehen könnten, hat sich als vorteilhaft erwiesen, auf die erste -- also untere -- Schweißnaht eine dünne Schicht eines Trennmittels als Pulver oder in flüssiger Form -- beispielsweise Talkum, Graphit, Schmieröl, Teflon -- aufzutragen, unmittelbar bevor die obere, zweite Schweißnaht ausgeführt wird. Verständlicherweise muß dieses Trennmittel den künftigen Einsatz der Materialbahn berücksichtigen, insbesondere wenn letztere für die Lebensmittelindustrie bestimmt ist.

Nach einem anderen Merkmal der Erfindung werden die Bahnlagen der Werkstoffbahnen nach dem Verschweißen mit den -- gegen Förderrichtung gesehen -- nachfolgenden Bahnpartnern voneinander getrennt, nachdem sie gegebenenfalls vor dem Trennvorgang durch in Förderrichtung verlaufende Schnitte in schmale Einzelbahnen unterteilt worden sind.

Die erfindungsgemäße Vorgehensweise -- und die entstehende endlose Materialbahn -- ist nicht nur für den Produktionsprozeß selbst von hoher Bedeutung; vielmehr sollen in dieser Weise auch bei Materialbahnwechsel und Umstellung der Schneidpartie in der Anlage die neuen Materialbahnen mit den ablaufenden Materialbahnen verbunden werden, um sie in kürzester Zeit durch die Auswickelmaschine ziehen zu können.

Die erfindungsgemäße Anlage mit zwischen Einsatzrolle bzw. Abwickeleinrichtung einerseits und Trenneinrichtung oder Rollenschneidmaschine anderseits angeordnetem Schweißgerät enthält an diesem einen linear in Förderrichtung der Werkstoffbahn geführten und zu dieser quer bewegbaren Schweiß- oder Schwingungskopf, der gegebenenfalls ein Schweißrad enthält sowie mit einer Auflage -- als Gegenelement des Schweißkopfes oder Schweißrades -- einen Durchlaufspalt als Schweißbereich für die mehrlagige Werkstoffbahn begrenzt; in diesem findet der Schweißvorgang statt. Dabei soll die Bewegungsbahn des Schweißkopfes durch eine Stützfläche der Auflage bestimmt werden.

Nach einer besonderen Ausgestaltung soll die Auflage als zylindrische Schweißwalze und drehbar ausgebildet sein.

Auch hat es sich als günstig erwiesen, zwischen der Einsatzrolle für die Werkstoffbahn und dem Schweißgerät eine Umlenkrolle für die Werkstoffbahn vorzusehen, die gegebenenfalls als Schweißwalze ausgebildet sowie als Auflage eingesetzt wird.

Insgesamt ergibt sich eine die vom Erfinder gesehene Aufgabe in bestechender Weise lösende Anlage, mit der das erfinderische Verfahren ohne weiteres durchgeführt zu werden vermag.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

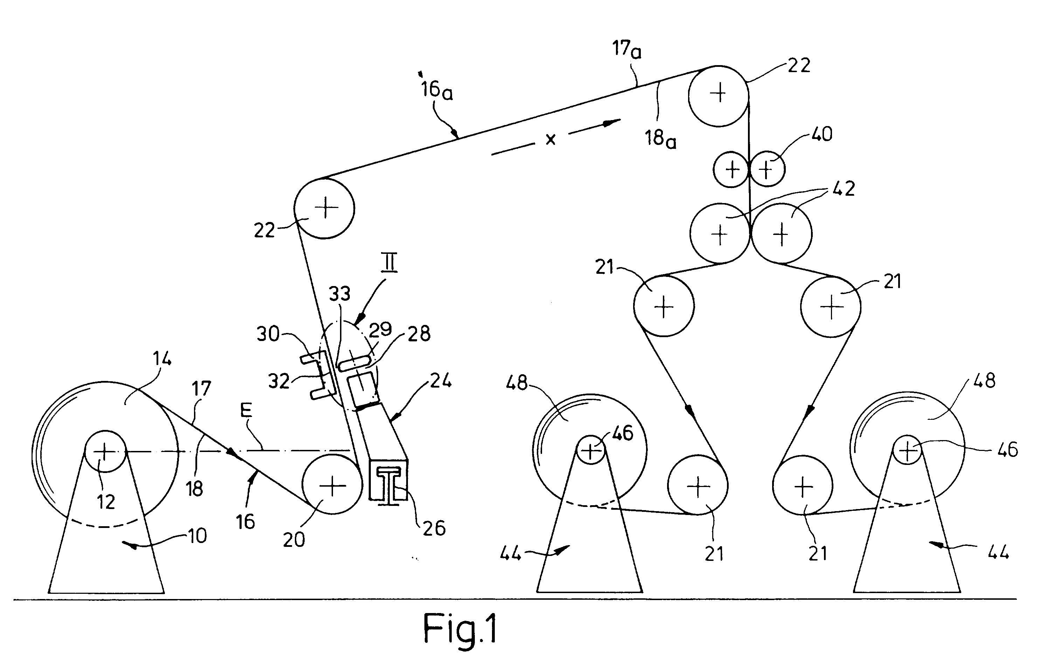

- Fig. 1:: eine Anlage zum Bearbeiten zweilagiger Werkstoffbahnen in schematischer Seitenansicht;
- Fig. 2 bis Fig. 5:: jeweils ein vergrößerter Ausschnitt aus Fig. 1 nach deren Pfeil II mit Skizzen zu einzelnen Verfahrensschritten.

In einer Abwickeleinrichtung 10 ist eine Einsatzrolle 12 für einen Wickel 14 aus einer flexiblen Werkstoffbahn 16 -- bevorzugt aus schweißbarem dünnem Metall- oder Kunststoffband oder Laminaten aus Metall- und Kunststoffband -- drehbar gelagert; die aus zwei Bahnlagen 17,18 bestehende Werkstoffbahn 16 ist über eine -- unterhalb einer durch die Rollenachse gelegten Ebene E vorgesehene -- Umlenkrolle 20 und von dieser aufwärts zu Firstrollen 22 geführt.

Der Umlenkrolle 20 ist am aufsteigenden Abschnitt der zweilagigen Werkstoffbahn 16 ein Ultraschall-Schweißgerät 24 mit einem an einer Linearführung 26 quer zur Förderrichtung x verfahrbaren Schweißkopf 28 mit Sonotrode nachgeordnet, also mit einem Schweißrad 29 od. dgl. Werkzeug, das den Schall auf die Schweißstelle überträgt und diese gleichzeitig zusammendrückt. Dem Schweißkopf 28 liegt an der ihm abgekehrten Bahnoberfläche eine Auflage 30 mit einer für den Schweißvorgang harten und glatten Stützfläche 32 gegenüber. Diese begrenzt mit jenem Schwingungs- oder Schweißkopf 28 einen Durchgangsspalt 33 als Schweißbereich für die Werkstoffbahn 16ₐ.

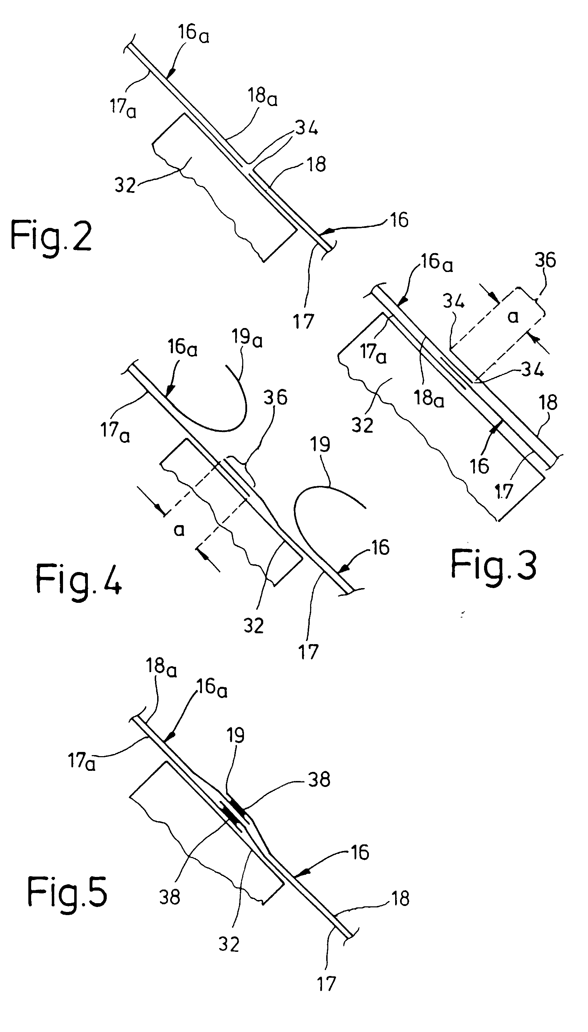

Um eine in Förderrichtung x an der Stützfläche 32 ankommende Werkstoffbahn 16 und eine davon ablaufende Werkstoffbahn 16ₐ miteinander verschweißen zu können, werden deren Stoßkanten 34 sauber zugeschnitten, dann wird die eine der Werkstoffbahnen 16 oder 16ₐ so auf die andere Werkstoffbahn 16ₐ oder 16 geschoben, daß gemäß Fig. 3 die freien Enden der Bahnlagen 17,18 und 17ₐ, 18ₐ einander um ein Überlappungsmaß a übergreifen. Die beiden zweilagigen Werkstoffbahnen 16,16ₐ werden entlang der -- senkrecht zur Bildebene verlaufenden --Bewegungsbahn des Schweißkopfes 28 als Schweißspur fixiert.

In Fig. 4 ist die ankommende untere Bahnlage 17 im Überlappungsbereich 36 auf die ablaufende unterer Bahnlage 17ₐ gelegt; die freien Enden 19,19ₐ der obenliegenden Bahnlagen 18,18ₐ können von den unteren Bahnlagen 17,17ₐ abgeklappt werden, um dem Schweißkopf 28 bzw. dem Schweißrad 29 den Zugang zu den beiden einander überlappend auf der Stützfläche 32 ruhenden rollennahen Bahnlagen 17,17ₐ zu erleichtern.

Hat der Schweißkopf 28 die beiden unteren Bahnlagen 17,17ₐ durch eine erste Schweißnaht 38 verbunden, wird deren Oberfläche mit einem Trennmittel bestrichen, und die zuvor auseinandergeklappten Enden 19,19ₐ der oberen Bahnlagen 18,18ₐ werden übereinandergelegt. Das Ultraschall-Schweißgerät 24 wird dann während seiner Rückbewegung in der erwähnten Schweißspur über die andere Bahnpaarung 18,18ₐ geführt und so die zweite Schweißnaht 38 gesetzt. Fig. 5 läßt die beiden in beschriebener Weise ausgeführten Schweißnähte 38 zwischen Bahnlage 17/17ₐ bzw. 18/18ₐ erkennen.

Die somit endlos gewordene zweilagige -- ablaufende --Werkstoffbahn 16ₐ wird nach der Schweißzone über die erwähnten Firstrollen 22 zu einer Schneidpartie 40 geführt, in welcher beide Bahnlagen 17ₐ,18ₐ der Werkstoffbahn 16ₐ besäumt und/oder in mehrere parallele Bahnen geschnitten werden. Eine anschließende Trennpartie 42 trennt die Bahnlagen 17ₐ,18ₐ der ablaufenden Werkstoffbahn 16ₐ, welche -- dann jeweils einlagig -- über Umlenkrollen 21 zu Aufwickeleinrichtungen 44 gelangen; diese enthalten -- die Bahnlagen 17ₐ,18ₐ ziehende -- nicht wiedergegebene Wickelantriebe für ihnen zugeordnete Aufwickelrollen 46; letztere nehmen die dann transportfertigen Fertigrollen 48 auf.

In einer Abwandlung der vorstehend beschriebenen Anordnung kann die erste Umlenkrolle 20 als sogenannte Schweißwalze ausgebildet sein. In diesem Fall erübrigt sich die spezielle Auflage 30; die Umlenkrolle 20 bildet selbst das Gegenelement für das Ultraschall-Schweißgerät 24.

In einer weiteren Ausgestaltung kann die Auflage 32 als zylindrische Schweißwalze ausgebildet und drehbar angeordnet sein.

Die Schweißzone selbst mußgut zugänglich in einer arbeitsgerechten Höhe vorgesehen werden; die zu verschweißenden Enden der Bahnlagen 17,17ₐ bzw. 18,18ₐ der beiden Werkstoffbahnen 16,16ₐ müssen sehr sorgfältig -- bevorzugt von Hand -- ausgerichtet werden. Mit diesen Maßgaben können die detaillierte Anordnung des Ultraschall-Schweißgerätes 24 sowie Form und Lage seines Gegenelements 30 von Fall zu Fall festgelegt werden.

## Patentansprüche

1. Verfahren zum Behandeln mehrlagiger Werkstoffbahnen, insbesondere mehrlagiger dünner Metall- oder Kunststoffbänder, bei dem die von einer Abwickeleinrichtung kommenden Werkstoffbahnen endwärts durch von einem Schweißgerät aufzubringende Schweißnähte zu Endlosbahnen verbunden und deren Bahnlagen getrennt werden,
dadurch gekennzeichnet,
daß die benachbarten Enden zweier einander in Förderrichtung (x) folgender mehrlagiger Werkstoffbahnen (16,16ₐ) durch Verschweißen ihrer Bahnlagen (17,17ₐ;18,18ₐ) im Bereich der Stoßkanten (34) miteinander verbunden sowie nachfolgend die Bahnlagen voneinander getrennt werden.

2. Verfahren nach Anspruch 1, dadurch gekennzeichnet, daß nach dem Verschweißen der dem Schweißgerät (24) oder einem von ihm umfaßten Schweißrad (29) fernen Paarung von Bahnlagen (17,17ₐ) die freien Enden (19,19ₐ) der zweiten Paarung von Bahnlagen (18,18ₐ) aufeinander gelegt werden, wonach letztere bei der Rückführung des Schweißgerätes bzw. Schweißrades über die gleiche Schweißspur verschweißt wird.

3. Verfahren nach Anspruch 1 oder 2, dadurch gekennzeichnet, daß die benachbarten Enden der beiden mehrlagigen Werkstoffbahnen (16,16ₐ) um ein Überlappungsmaß (a) übereinandergeschoben werden und anschließend der Überlappungsbereich (36) jeder Bahnlage (17,17ₐ;18,18ₐ) verschweißt wird.

4. Verfahren nach einem der Ansprüche 1 bis 3, dadurch gekennzeichnet, daß die freien Enden (19,19ₐ) der dem Schweißgerät (24) naheliegenden Paarung von Bahnlagen (18,18ₐ) abgeklappt sowie die freien Enden der vom Schweißgerät abgekehrten Paarung von Bahnlagen (17,17ₐ) freigelegt werden, wonach deren freie Enden miteinander verschweißt werden.

5. Verfahren nach einem der Ansprüche 1 bis 4, dadurch gekennzeichnet, daß die Oberfläche der ersten entstandenen Schweißnaht (38) vor dem nachfolgenden Schweißvorgang mit einem Trennmittel überzogen wird.

6. Verfahren nach einem der Ansprüche 1 bis 5, dadurch gekennzeichnet, daß die Bahnlagen (17ₐ,18ₐ) der Werkstoffbahn (16ₐ) unmittelbar nach dem Verschweißen mit den -- gegen Förderrichtung (x) gesehen -- nachfolgenden Bahnpartnern (17,18) voneinander getrennt werden.

7. Verfahren nach Anspruch 6, dadurch gekennzeichnet, daß die Bahnlagen (17ₐ, 18ₐ) der endlosen Werkstoffbahn (16ₐ) nach dem Anschweißen der nachfolgenden Bahnpartnern (17,18) und vor dem Trennvorgang durch in Förderrichtung (x) verlaufende Schnitte unterteilt werden.

8. Anlage zum Behandeln mehrlagiger Werkstoffbahnen, die auf eine Einsatzrolle gewickelt und von dieser einer Abwickeleinrichtung zugeführt werden, in welcher sie durch von einem Schweißgerät aufzubringende Schweißnähte zu Endlosbahnen verbunden werden und in dieser Form zu einer Trenneinrichtung gelangen, insbesondere Anlage zur Durchführung des Verfahrens nach wenigstens einem der voraufgehenden Patentansprüche, dadurch gekennzeichnet, daß das Schweißgerät (24) zwischen Einsatzrolle (12) und Trenneinrichtung (42) angeordnet ist.

9. Anlage nach Anspruch 8, gekennzeichnet durch einen linear in Förderrichtung (x) der Werkstoffbahn (16,16ₐ) geführten und zu dieser quer bewegbaren schweiß- oder Schwingungskopf (28), der mit einer Auflage (30) als Gegenelement des Schweißkopfes einen Durchgangsspalt (33) als Schweißbereich für die Werkstoffbahn (16,16ₐ) begrenzt.

10. Anlage nach Anspruch 9, dadurch gekennzeichnet, daß der Schweißkopf (28) eine Sonotrode enthält, insbesondere ein Schweißrad (29).

11. Anlage nach Anspruch 9 oder 10, gekennzeichnet durch eine die Bewegungsbahn des Schweißkopfes (28) bzw. Schweißrades (29) bestimmende Stützfläche (32) der Auflage (30).

12. Anlage nach einem der Ansprüche 9 bis 11, dadurch gekennzeichnet, daß die Auflage (30) als zylindrische Schweißwalze und drehbar ausgebildet ist.

13. Anlage nach einem der Ansprüche 8 bis 12, dadurch gekennzeichnet, daß zwischen der Einsatzrolle (12) in der Abwickeleinrichtung (10) für die Werkstoffbahn (16) und dem Schweißgerät (24) eine Umlenkrolle (20) für die Werkstoffbahn vorgesehen ist.

14. Anlage nach Anspruch 13, dadurch gekennzeichnet, daß die Umlenkrolle (20) als Schweißwalze ausgebildet sowie als Auflage eingesetzt ist.

15. Anlage nach einem der Ansprüche 8 bis 15, dadurch gekennzeichnet, daß zwischen einer Umlenkrolle (22) für die endlose Werkstoffbahn (16ₐ) und einem in Förderrichtung folgenden Paar von Umlenkrollen (21) für die endlosen Bahnlagen (17ₐ,18ₐ) eine Schneideinrichtung (40) und/oder eine Trenneinrichtung (42) angeordnet sind/ist.
